# DEMANDE DE BREVET EUROPEEN

(11) **EP 3 095 735 A1**
(43) Date de publication de la demande: **23.11.2016**
(21) Numéro de dépôt: 15168409.9
(22) Date de dépôt: 20.05.2015
(51) Int. Cl.: B65F 1/14

(54) **MACHINE DE COLLECTE, DE TRI ET DE CONDITIONNEMENT SELECTIF DE DECHETS**

(71) Demandeur: Letienne, Jacques, 41220 La Ferte St Cyr (FR)
(72) Inventeur: Letienne, Jacques, 41220 La Ferte St Cyr (FR)
(74) Mandataire: Thomas, Nadine

(57) **Abrégé**

La présente invention concerne une machine de collecte, tri et conditionnement de déchets comprenant un bâti-support (1) de plusieurs bacs juxtaposés et alignés (10-16), chacun apte à stocker des déchets de natures différentes, chaque bac étant pourvu d'une ouverture refermable par une trappe pour des déchets spécifiques. Selon l'invention, la machine comprend en outre une tête de compactage (4) mobile en translation et apte à se déplacer au-dessus desdits bacs (10-16), et au moins un desdits couvercles présente une commande automatique apte à ouvrir l'ouverture avec laquelle elle coopère selon la nature du déchet présenté devant ou à proximité immédiate de l'ouverture associée au couvercle, de sorte que ladite machine est apte à former des balles de déchets compactés, chacune de natures différentes.

## Description

### DOMAINE TECHNIQUE DE L'INVENTION

L'invention se rapporte au domaine de la collecte, du tri et aussi du conditionnement de déchets de natures diverses et variées. Les déchets sont par définition de natures différentes ce qui rend leur traitement difficile et onéreux. Le tri constitue une première étape vers la simplification du traitement des déchets ; une étape ultérieure consiste en un conditionnement adéquate des déchets déjà triés. L'objectif final est de recycler un volume maximum de déchets triés et conditionnés.

### ETAT DE LA TECHNIQUE ANTERIEURE

On connait des installations industrielles permettant de collecter des déchets, voire de les trier avant de les compacter et/ou de les incinérer. Au niveau domestique, des bacs de tri sont prévus pour les habitations individuelles ou collectives ; de façon usuelle, ces bacs sont destinés à contenir des déchets de type emballage, papier, des déchets en verre, et les autres types de déchets. Bien entendu ces bacs dédiés étant remplis de façon non contrôlée par les personnes concernées, on constate souvent une disparité due à des erreurs ou à une négligence dans le tri. De plus les bacs ne sont pas compactés ; une fois plus ou moins remplis, ils sont évacués de leur lieu de stockage par des services ou personnes spécialisés qui les transportent vers des lieux de traitement et de transformation. Là, ce sont des installations industrielles qui assurent notamment un tri plus spécialisé avant par exemple de compacter, ou d'assurer leur combustion.

Concernant le tri industriel des déchets, on peut citer le brevet EP 1 483 062 B1 qui décrit un procédé pour séparer, à partir d'un mélange d'objets, des objets spécifiques ayant une caractéristique spectrale donnée relative à la couleur des objets. Une analyse spectrale est ici utilisée, avec analyse de bandes spectrales étroites et déterminées correspondant à certaines couleurs recherchées.

D'autres techniques sont connues pour trier des déchets ou objets divers.

Au niveau des collectivités, un tri grossier est opéré, nullement optimisé.

On connait encore la demande de brevet FR 2 962 720 A1 qui divulgue une machine de collecte et de tri de déchets spécifiques c'est-à-dire à faible encombrement. Plus précisément cette machine traite essentiellement les déchets issus de machines distribuant des boissons chaudes ou froides, tels que des canettes métalliques, des bouteilles en plastique ou encore des gobelets en plastique. Pour ce faire, la machine est notamment équipée d'une bouche d'introduction des déchets, d'un moyen de reconnaissance des déchets, d'un trieur et d'un moyen de stockage ; cet ensemble occupe un volume réduit comparativement aux machines connues similaires. Cependant une telle machine ne peut traiter qu'un certain type de déchets, ce qui en limite l'intérêt.

Il existe un besoin pour une machine apte à trier et traiter une gamme plus large de déchets, par exemple sur des sites d'évènements temporaires, où un large public est amené à générer des déchets ; par exemple dans des campings, lors d'expositions ou de foires, ou autres lieux de rassemblement. Par ailleurs il existe un besoin pour un tri vraiment sélectif afin de collecter et de traiter des objets (ou déchets) de nature similaire. En effet à partir de déchets collectés similaires, la valorisation ultérieure est bien meilleure car quasiment aucune opération ultérieure supplémentaire n'est nécessaire afin de recycler le type de déchets collectés.

### EXPOSE DE L'INVENTION

L'invention vise à remédier aux inconvénients de l'état de la technique et notamment à proposer une machine de collecte, de tri et de conditionnement de déchets améliorée notamment en ce qui concerne la qualité du tri et la production de balles de déchets homogènes donc valorisables.

Pour ce faire est proposé selon l'invention une machine de collecte, tri et conditionnement de déchets comprenant un bâti-support de plusieurs bacs juxtaposés et alignés, chacun apte à stocker des déchets de natures différentes, chaque bac étant pourvu d'une ouverture refermable par une trappe (ou couvercle) pour des déchets spécifiques. De façon caractéristique, la machine comprend en outre une tête de compactage mobile en translation et apte à se déplacer au-dessus desdits bacs, et au moins l'une desdites trappes présente une commande automatique apte à ouvrir l'ouverture avec laquelle elle coopère selon la nature du déchet présenté devant ou à proximité immédiate de l'ouverture associée à la trappe, de sorte que ladite machine est apte à former des balles de déchets compactés chacune de natures différentes

L'automatisation de la machine permet, outre les avantages cités ci-dessus relatifs à la valorisation des déchets, de guider et d'aider l'utilisateur quant au choix du bac dans lequel il doit introduire le déchet (ou objet). Des balles compactes et homogènes sont avantageusement formées.

Plus précisément, la tête de compactage est mobile sur un rail fixé en partie supérieure du bâti-support et son déplacement est corrélé au niveau de remplissage du ou des bacs. Autrement dit, le compactage d'un bac a lieu dès qu'un niveau donné de remplissage est atteint. Le rail de support et de guidage de la tête de compactage fait partie de la partie supérieure du bati-support et il est préférentiellement caché par cette partie supérieure ou carter.

En outre, au moins un témoin visuel est associé avec ladite au moins une ouverture et avec le couvercle associé afin d'indiquer à l'utilisateur la possibilité d'introduire le déchet considéré dans l'ouverture. Ceci constitue une aide, un guidage de l'utilisateur ; en outre cette caractéristique accroit la fiabilité du tri car le risque d'erreur est moindre, vis-à-vis d'un tri fait uniquement par l'utilisateur, sans aide particulière.

De façon intéressante, la machine selon l'invention comprend en outre au moins un détecteur de proximité associé à ladite au moins une ouverture, afin de détecter la présence de déchet.

Par ailleurs, la machine comprend en outre au moins un détecteur capacitif de proximité placé au niveau d'une ouverture et apte à détecter la présence d'une main ou d'une partie corporelle au niveau de ladite ouverture, ledit détecteur coopérant avec le mécanisme de commande du mouvement du couvercle afin d'empêcher la fermeture du couvercle lorsqu'une main est présente au niveau de ladite ouverture. Cet aspect renforce la sécurité du fonctionnement de la machine ; un couvercle ne peut ainsi se refermer brutalement sur la main d'une personne, au risque de la blesser.

Afin de détecter plus spécifiquement les déchets conducteurs, la machine peut comprendre en outre au moins un détecteur inductif de type à courant de Foucault, fixé sur l'un au moins desdits bacs. Les objets ou déchets en aluminium et en acier sont ainsi reconnus et ils peuvent être introduits dans le bac concerné.

Par ailleurs, on peut prévoir en outre au moins un détecteur inductif de type à réluctance magnétique, fixé sur l'un au moins desdits bacs et apte à détecter des déchets magnétiques.

De façon intéressante, la machine comprend en outre au moins un témoin du niveau de remplissage de l'un au moins desdits bacs, apte à coopérer avec le moyen de commande du déplacement de la tête de compactage et/ou avec un moyen de déplacement du bac. Cet aspect technique est largement innovant et intéressant car il permet un compactage intelligent ; la tête de compactage peut notamment presser les déchets à plusieurs reprises avant que la hauteur maximale tolérée ne soit atteinte.

Sans sortir du cadre de l'invention, une caméra de reconnaissance d'un logo et/ou d'une couleur peut être prévue, apte à détecter des déchets plastique de type PET. La trappe associée ouvrira l'ouverture uniquement lorsqu'un logo, ou une couleur sera reconnue.

De plus, la machine peut comprendre au moins un lecteur de code-barre apte à détecter des flux de plastiques différents et/ou des métaux différents et/ou des cartons différents.

La machine selon l'invention trouve une application intéressante lorsqu'elle comprend au moins un module apte à traiter des déchets de type plastique, ledit module étant constitué de deux ou trois bacs. A titre illustratif, chacun des bacs peut stocker par exemple des plastiques de type PET clair, de type PET coloré, de type PEHD. Un tri plus sélectif que celui qui serait réalisé uniquement sur les matières plastiques, est ici opéré.

Concernant les déchets métalliques, la machine peut comprendre un module spécifique constitué d'un premier et d'un deuxième bacs, le premier bac étant apte à traiter des déchets de type aluminium et le second étant apte à traiter des déchets de type acier.

Les déchets issus de cartonnages peuvent être traités dans un module spécialisé par exemple constitué d'un premier bac apte à traiter des déchets de type cartonettes et d'un deuxième bac apte à traiter de déchets de type briques d'emballage.

En vue de renforcer le caractère innovant de la machine, on prévoit avantageusement de l'équiper avec un capteur de niveau à ultrasons associé avec l'un au moins desdits bacs et apte à communiquer avec un émetteur-récepteur éloigné afin d'alerter en cas de niveau de remplissage supérieur à un niveau seuil prédéfini. Cette gestion à distance permet de renforcer la sécurité et la gestion.

Avantageusement, ladite au moins une ouverture présente une forme et une dimension adaptée à la nature des déchets du bac concerné.

En outre, la machine selon l'invention peut comprendre au moins un bac non dédié apte à collecter des déchets refusés dans lesdits bacs dédiés

### BREVE DESCRIPTION DES FIGURES

D'autres caractéristiques et avantages de l'invention ressortiront à la lecture de la description qui suit, en référence aux figures annexées, qui illustrent :
- la figure 1, une vue de face schématique de la machine de tri sélectif selon un premier mode de réalisation de l'invention ;
- la figure 2, une vue schématique d'un module permettant la collecte et le tri de différents objets en plastique ;
- la figure 3, une vue schématique d'un module permettant la collecte et le tri de déchets métalliques ; et
- la figure 4, une vue schématique de face d'un module de tri de déchets issus de cartonnages.

Pour plus de clarté, les éléments identiques ou similaires sont repérés par des signes de référence identiques sur l'ensemble des figures.

### DESCRIPTION DETAILLEE D'UN MODE DE REALISATION

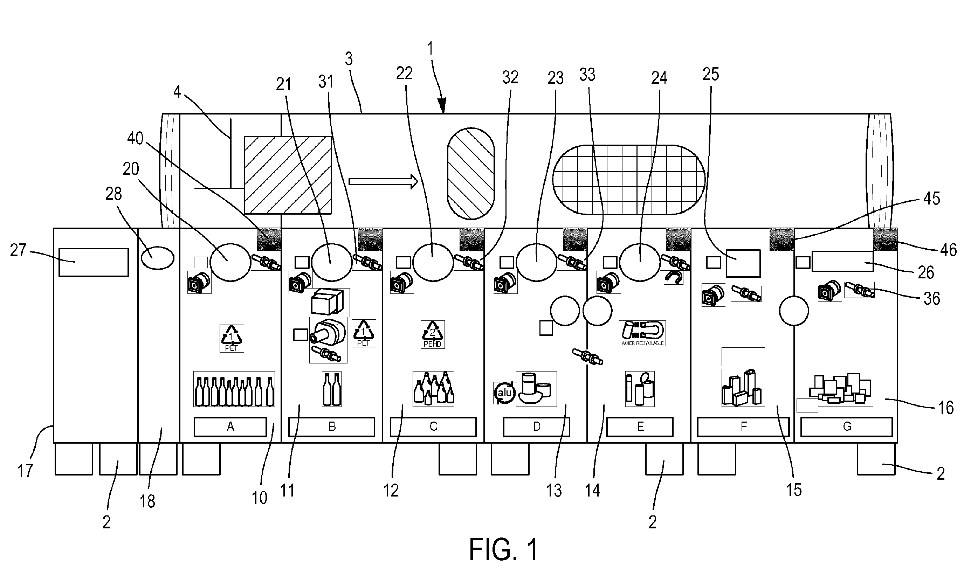

La figure 1 est une vue schématique de face d'une machine selon un mode préféré de réalisation de l'invention. Un bâti-support 1 est prévu, adapté et apte à rassembler et à structurer les différentes éléments constitutifs de la machine. Le bâti supporte ici sept bacs dédiés référencés 10 à 16 ainsi qu'un huitième bac 17 non dédié et qu'un neuvième bac 18 non dédié. « dédiés concerne les bacs permettent chacun de collecter des déchets ou objets de même nature, mais différente d'un bac à l'autre et qui ont été admis de façon sélective et automatisée par ladite machine dans chacun des bacs concernés. Les bacs 10-18 sont juxtaposés, alignés, ouverts vers le haut. Des pieds et/ou des renforts 2 peuvent être prévus afin de caler cet ensemble sur le site d'implantation. Le bâti 1 présente une ossature ou carter au-dessus des bacs dédiés 10 à 16 ; cette ossature ou carter permet notamment le montage d'un ou plusieurs rails 3 pour le support et le guidage d'une tête de compactage 4. La tête de compactage 4 est donc mobile en translation au-dessus des bacs 10 à 16 et son déplacement est commandé selon différents paramètres comme il sera explicité ci-après. De préférence la tête de compactage 4 est masquée par le carter.

De façon particulière, l'un au moins mais de préférence tous les bacs dédiés 10 à 16 sont munis d'une ouverture 20 à 26 obturable par un couvercle ou trappe (non représenté pour des raisons de clarté du dessin) à commande automatique. Ainsi l'ouverture par le couvercle ou trappe est réalisée selon la nature du déchet présenté devant et à proximité immédiate de l'ouverture associée au couvercle.

Pour ce faire, des détecteurs sont placés à proximité immédiate de l'une au moins mais de préférence de toutes les ouvertures 20 à 26.

Le déplacement de la tête de compactage 4 est corrélé au niveau de remplissage des bacs dédiés 10 à 16 ; un capteur du niveau de remplissage est prévu à cet effet préférentiellement à l'intérieur de chaque bac. Lorsque le niveau indiqué par le détecteur de niveau atteint une valeur maximale donnée et prédéterminée, alors la tête de compactage 4 est commandée pour venir se positionner au-dessus du bac concerné et presser les déchets qui y sont stockés. Si le niveau après compactage est au-dessous du seuil maximal prédéterminé alors le bac peut à nouveau collecter des déchets ; dans le cas contraire, un signal indique que le bac est plein et que les déchets qu'il contient peuvent faire l'objet d'une balle unitaire. Un capteur de niveau ultrasons 40 à 46 est fixé sur chaque bac et il émet un signal dès que le bac est plein, par exemple sous la forme d'un sms à un récepteur.

Le retrait de la balle formée à l'intérieur du bac considéré peut être exécuté manuellement ou automatiquement. L'ouverture de la face frontale du bac considéré permet un accès à la balle de déchets formée dans ledit bac. Il est intéressant de souligner que les balles de déchets compactés ainsi formées sont directement valorisables car formées de déchets de même nature, avec un très faible pourcentage de déchets d'autre nature.

En outre l'utilisateur peut avantageusement être guidé dans son choix par des lampes témoins visuelles, par exemple de couleur rouge ou verte, afin de le guider dans sa décision d'introduire ou non le déchet dans l'ouverture dédiée appropriée. Ces lampes témoins facilitent grandement la tâche de l'utilisateur en lui demandant un degré de réflexion minimal donc une rapidité dans son action. Au niveau de la machine, cet aspect renforce la qualité des balles formées, en augmentant le pourcentage de matière appropriée présent dans la balle. Le taux de refus par les filières qui reçoivent les balles ainsi formées, est significativement abaissé.

Concernant la sécurité de la machine, on prévoit de préférence au niveau de chaque ouverture dédiée 20-26 un détecteur capacitif de proximité 30-36 afin de détecter la présence d'une main par exemple à proximité de l'ouverture associée. Ce détecteur 30-36 coopère fonctionnellement avec le mécanisme de commande de l'ouverture de la trappe. Bien entendu le détecteur de proximité 30-36 n'est pas nécessaire au fonctionnement général de la machine mais il contribue à sa sécurité.

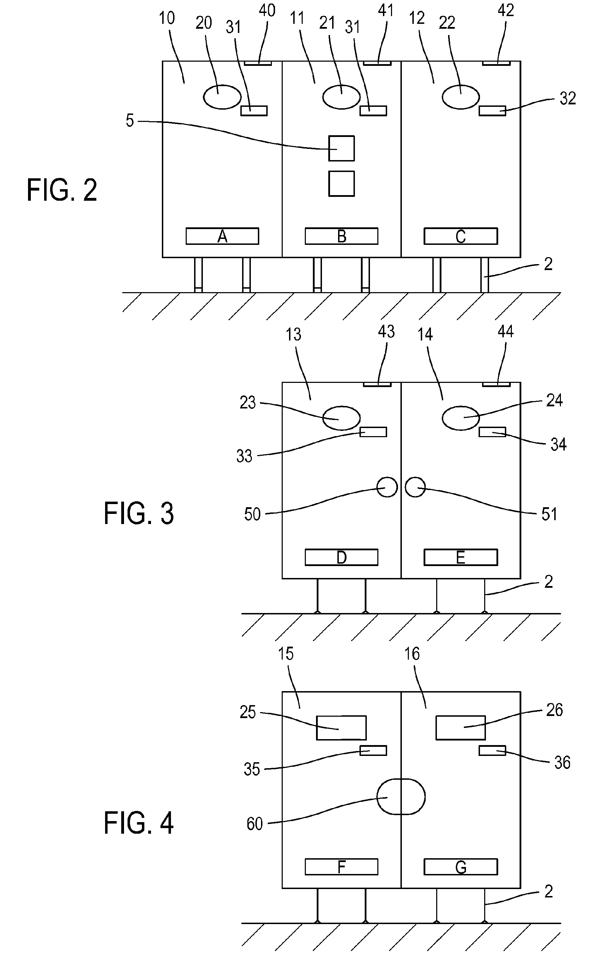

La figure 2 montre un module comprenant trois bacs 10, 11, 12 apte à collecter des déchets de type plastique. Chaque bac comporte donc une bouche ou ouverture 20 à 22, la première 20 pour l'introduction de PET clair, la deuxième 21 pour les PET foncés et la troisième 22 pour des PEHD. Un lecteur de code-barre 5 peut être prévu à proximité de l'une des ouvertures de ce module afin de différencier les trois flux de plastique. Une caméra de reconnaissance de logos peut être montée sur l'un de ces bacs, ainsi qu'une caméra de reconnaissance de couleur, afin de différencier les PET clairs des PET foncés. On collecte ainsi les trois types de plastiques dans ces trois bacs, de façon simple et avec une marge d'erreur très faible.

La figure 3 illustre un module dédié au traitement des déchets métalliques. Ce module comprend deux bacs 13, 14 chacun muni d'une bouche 23, 24. Un détecteur inductif à courant de Foucault 50 est fixé sur la face avant de l'un des bacs 13, afin de détecter les déchets conducteurs en acier ou en aluminium notamment. Un détecteur inductif à réluctance magnétique 51 est placé sur le deuxième bac dédié 14 du module métal afin de détecter des déchets de nature magnétique. Chaque détecteur 50, 51 permettra l'accès à l'une des deux bouches 23, 24 de ce module.

La figure 4 montre le module dédié à la collecte des cartons et comprend un bac 15 pour les emballages de liquides alimentaires (emballages de type briques) et un bac 16 pour les déchets de type cartonettes ; un détecteur ELA et cartons 60 est prévu sur la face avant du module cartons afin de différencier les deux types de carton précités. Bien entendu selon la nature du carton détecté, la bouche 25 ou la bouche 26 pourront être ouvertes.

Un signal lumineux accompagne de préférence le choix de la bouche dans laquelle le déchet peut être introduit, afin de faciliter et de sécuriser l'opération de l'utilisateur.

Sur la figure 4, les bouches 25 et 26 présentent une forme rectangulaire afin d'être adaptée aux briques ou cartons à collecter ; sur les figures 2 et 3, les bouches 20 à 24 sont sensiblement ovales car cette forme répond mieux à l'introduction des déchets (plastique, métaux) à collecter dans ces modules. L'utilisateur pourra choisir selon le cas envisagé.

La figure 1 illustre en outre un bac 17 non dédié et apte à collecter des déchets refusés et non traités par les bacs dédiés 10 à 16. Il peut en effet arriver qu'un certain type de déchets n'entre pas dans les critères et caractéristiques techniques détectables et reconnaissables par les bacs dédiés 10 à 16. Dans ce cas de figure, l'utilisateur a la possibilité d'introduire ce déchet dans le bac 17, voire dans encore un autre bac 18 par exemple uniquement dédié aux bouchons de bouteilles en plastique. En outre en cas de défaillance du système de commande de l'un des bacs dédiés, l'utilisateur peut quand même introduire dans le bac 17 ses déchets non collectés, ce qui évite de laisser ces déchets au sol. Les bacs 17, 18 sont préférentiellement recouverts.

## Revendications

1. Machine de collecte, tri et conditionnement de déchets comprenant un bâti-support (1) de plusieurs bacs (10-16) juxtaposés et alignés, chacun apte à stocker des déchets de natures différentes, chaque bac étant pourvu d'une ouverture (20-26) refermable par une trappe pour des déchets spécifiques **caractérisée en ce qu'**elle comprend en outre une tête de compactage (4) mobile en translation et apte à se déplacer au-dessus desdits bacs (10-16), et **en ce qu'**au moins une desdits trappes présente une commande automatique apte à découvrir l'ouverture (20-26) avec laquelle elle coopère selon la nature du déchet présenté devant ou à proximité immédiate de l'ouverture associée à ladite trappe, de sorte que ladite machine est apte à former des balles de déchets compactés, chacune de natures différentes.

2. Machine selon la revendication 1 **caractérisée en ce que** ladite tête de compactage (4) est mobile sur un rail fixé au bâti-support et son déplacement est corrélé au niveau de remplissage du ou des bacs (10-16).

3. Machine selon l'une des revendications précédentes **caractérisée en ce qu'**au moins un témoin visuel est associé avec ladite au moins une ouverture et avec la trappe associée afin d'indiquer à l'utilisateur la possibilité d'introduire le déchet considéré dans l'ouverture.

4. Machine selon l'une des revendications précédentes **caractérisée en ce qu'**elle comprend en outre au moins un détecteur de proximité associé à ladite au moins une ouverture, afin de détecter la présence de déchet.

5. Machine selon l'une des revendications précédentes **caractérisée en ce qu'**elle comprend en outre au moins un détecteur capacitif de proximité (30-36) placé au niveau d'une ouverture et apte à détecter la présence d'une main ou d'une partie corporelle au niveau de ladite ouverture, ledit détecteur coopérant avec le mécanisme de commande du mouvement de la trappe afin d'empêcher la fermeture du couvercle lorsqu'une main est présente au niveau de ladite ouverture.

6. Machine selon l'une des revendications précédentes **caractérisée en ce qu'**elle comprend en outre au moins un détecteur inductif de type à courant de Foucault (50), fixé sur l'un au moins desdits bacs et apte à détecter des déchets conducteurs.

7. Machine selon l'une des revendications précédentes **caractérisée en ce qu'**elle comprend en outre au moins un détecteur inductif de type à réluctance magnétique (51), fixé sur l'un au moins desdits bacs (20-26) et apte à détecter des déchets magnétiques.

8. Machine selon l'une des revendications 2 à 7 **caractérisée en ce qu'**elle comprend en outre au moins un témoin du niveau de remplissage de l'un au moins desdits bacs, apte à coopérer avec le moyen de commande du déplacement de la tête de compactage (4) et/ou avec un moyen de déplacement du bac.

9. Machine selon l'une des revendications précédentes **caractérisée en ce qu'**elle comprend en outre une caméra de reconnaissance d'un logo et/ou d'une couleur apte à reconnaître des déchets plastiques de type PET.

10. Machine selon l'une des revendications précédentes **caractérisée en ce qu'**elle comprend en outre au moins un lecteur de code-barre (30-36) apte à reconnaitre des flux de déchets plastique différents et/ou de cartons différents et/ou de métaux différents.

11. Machine selon l'une des revendications précédentes **caractérisée en ce qu'**elle comprend au moins un module apte à traiter des déchets de type plastique, ledit module étant constitué de deux ou trois bacs (10-12).

12. Machine selon l'une des revendications précédentes **caractérisée en ce qu'**elle comprend au moins un module apte à traiter des déchets métalliques, ledit module étant constitué d'un premier (13) et d'un deuxième (14) bacs, le premier bac (13) étant apte à traiter des déchets de type aluminium et le second (14) étant apte à traiter des déchets de type acier.

13. Machine selon l'une des revendications précédentes **caractérisée en ce qu'**elle comprend au moins un module apte à traiter des déchets de type carton, ledit module étant constitué d'un premier bac (15) apte à traiter des déchets de type cartonettes et d'un deuxième bac (16) apte à traiter des déchets de type briques d'emballage.

14. Machine selon l'une des revendications précédentes **caractérisée en ce qu'**elle comprend en outre un capteur de niveau à ultrasons (40-46) associé avec l'un au moins desdits bacs (20-26) et apte à communiquer avec un émetteur-récepteur éloigné afin d'alerter en cas de niveau de remplissage supérieur à un niveau seuil prédéfini.

15. Machine selon l'une quelconque des revendications précédentes **caractérisée en ce qu'**elle comprend en outre au moins un bac (17,18) non dédié apte à collecter des déchets refusés dans lesdits bacs dédiés.
